# EUROPÄISCHE PATENTSCHRIFT

(11) **EP 1 708 941 B1**
(45) Veröffentlichungstag und Bekanntmachung des Hinweises auf die Patenterteilung: **20.02.2008**
(21) Anmeldenummer: 04803750.1
(22) Anmeldetag: 10.12.2004
(51) Int. Cl.: B65G 69/18, B65B 1/28, B65B 69/00

(54) **VERFAHREN ZUR KONTAMINATIONSVERMEIDENDEN ENTLEERUNG BZW. BEFÜLLUNG VON SCHÜTTGUTBEHÄLTERN**
METHOD FOR THE CONTAMINATION-PREVENTING EMPTYING AND FILLING OF BULK CONTAINERS
PROCEDE POUR VIDER ET REMPLIR SANS CONTAMINATION DES CONTENANTS POUR MATIERES EN VRAC

(30) Priorität: 11.12.2003 DE 10358037; 06.02.2004 DE 102004005961
(43) Veröffentlichungstag der Anmeldung: 11.10.2006
(73) Patentinhaber: Hecht Anlagenbau GmbH, 85276 Pfaffenhofen a.d. Ilm (DE)
(72) Erfinder: DENK, Richard, 85298 Scheyern (DE); HELMER, Manfred, 85296 Rohrbach (DE); ROCHOLL, Timothey, 59071 Hamm (DE)
(74) Vertreter: Kilian, Helmut
(86) Internationale Anmeldenummer: PCT/EP2004/014109
(87) Internationale Veröffentlichungsnummer: WO 2005/056443

(56) Entgegenhaltungen:
- DE-A1- 19 806 932
- DE-U1- 20 001 005
- US-A- 5 944 070
- US-A1- 2001 027 822
- US-B1- 6 653 377

## Beschreibung

Die stetig steigenden Anforderungen an industriell hergestellte Produkte bringen auch immer höhere Anforderungen an die Rohstoffe und Komponenten, die verwendet werden, mit sich. Die Produkte haben einen immer höheren Spezialisierungsgrad, das heißt: immer höhere Reinheitsgrade, immer wirksamere Stoffe und leider auch immer gefährlichere Stoffe. Toxizität, Allergieauslösung, Auswirkungen von Verunreinigungen nehmen immer mehr zu. Die Probleme gehen in zwei Richtungen. Einmal in den Bereich des Bedienerschutzes - der Bediener darf keiner Gefährdung ausgesetzt werden - und zum anderen in den Bereich des Produktschutzes - das Produkt darf nicht mit Fremdstoffen belastet werden. Dies sind allgemeine Anforderungen, die vor allem in bio- und lebensmitteltechnischen, chemischen und pharmazeutischen Bereichen der Industrie vorkommen.

Um diesen Anforderungen gerecht zu werden, werden die zu verarbeitenden Produkte nicht offen, sondern in geschlossenen Transportbehältern wie z.B. festen Transportbehältern, flexiblen Transportbehältern (auch Big-Bags genannt) oder Fässern gehandhabt. Alle Transportbehälter können zusätzlich mit einem Folieninnensack ausgerüstet sein.

Dabei stellt sich die Frage, wie diese Transportbehälter kontaminationsvermeidend entleert und befüllt werden können.

Während für die festen Transportbehälter bereits teure und aufwändige Andocksysteme wie z.B. geteilte Klappen, Konussysteme oder dgl. zur Verfügung stehen, gibt es für Transportbehälter mit flexiblen Auslauf bzw. Einlauf überhaupt keine zufriedenstellende Lösung. Ein bisheriges System ist durch die US-B-6 653 377 bekannt.

Das Problem besteht darin, dass es bis jetzt keine Möglichkeit gibt, Transportbehälter mit flexiblem Auslauf in zur Umgebung abgeschlossener Form zur Umgebung an einen Produkteinlauf oder Produktauslauf einer Anlage oder eines Systems anzuschließen und das entleerte bzw. befüllte Gebinde nach dem Entleeren bzw. Befüllen wieder kontaminationsfrei zu entfernen.

Bisherige Systeme verwenden für den Anschluss der Gebinde mechanische Klemmeinrichtungen, wobei der Auslauf am Anschlusssystem eingeklemmt und abgedichtet wird. Beim Wechsel des Gebindes ist jedoch sowohl das Anschlusssystem wie auch das Gebinde offen. So kann es durch staubbelastete Luft und durch nachrieselndes Restprodukt zu Verschmutzungen an der Anschlussstelle und zu Kontaminationen des Bedieners und der Umgebung kommen.

Aufgabe der Erfindung ist es, ein Verfahren zu kontaminationsarmen Entleerung bzw. Befüllung von Schüttgutbehältern unter Verwendung von Schutzfolien zu schaffen.

Diese Aufgabe wird erfindungsgemäß mit einem Verfahren gemäß Anspruch 1, 7, 8 und 15 gelöst. Vorteilhafte Weiterbildungen der Erfindung sind Gegenstand der Unteransprüche.

Im Folgenden werden bevorzugte Ausführungsformen des erfindungsgemäßen Verfahrens anhand der beigefügten Zeichnungen beschrieben. Auf diesen zeigen
die Fig. 1 bis 9 Verfahrensschritte zwischen einer Ausgangsstellung und dem nächstmaligen Erreichen dieser Ausgangsstellung unter Verwendung eines Folienträgers, welcher Folienvorrat für mehrere Behälterwechsel aufnehmen kann, beim Entleeren eines Behälters mit flexiblem Auslauf,
die Fig. 10 bis 17 Verfahrensschritte der Entsorgung des nicht mehr verwertbaren Endes einer Schutzfolie und der Anbringung einer neuen beim Entleeren eines Behälters,
die Fig. 18 bis 27 Verfahrensschritte bei Einzelsackentleerung mit Schutzfolie für nur jeweils einen Entleerungsvorgang,
Fig. 28 das Verfahren bei Entleerung eines Behälters mit starrem Auslauf,
Fig. 29 bis 39 Verfahrensschritte eines Befüllvorganges zwischen einer Ausgangsstellung und dem nächstmaligen Erreichen dieser Ausgangsstellung unter Verwendung eines Folienträgers, welcher Folienvorrat für mehrere Behälterwechsel aufnehmen kann,
Fig. 40 bis 47 Verfahrensschritte der Entsorgung des nicht mehr verwertbaren Endes einer Schutzfolie und der Anbringung einer neuen,
Fig. 48 bis 53 Verfahrensschritte zur Reinigung der Unterseite des Befüll-Abschlussorgans.

### Entleerungsverfahren

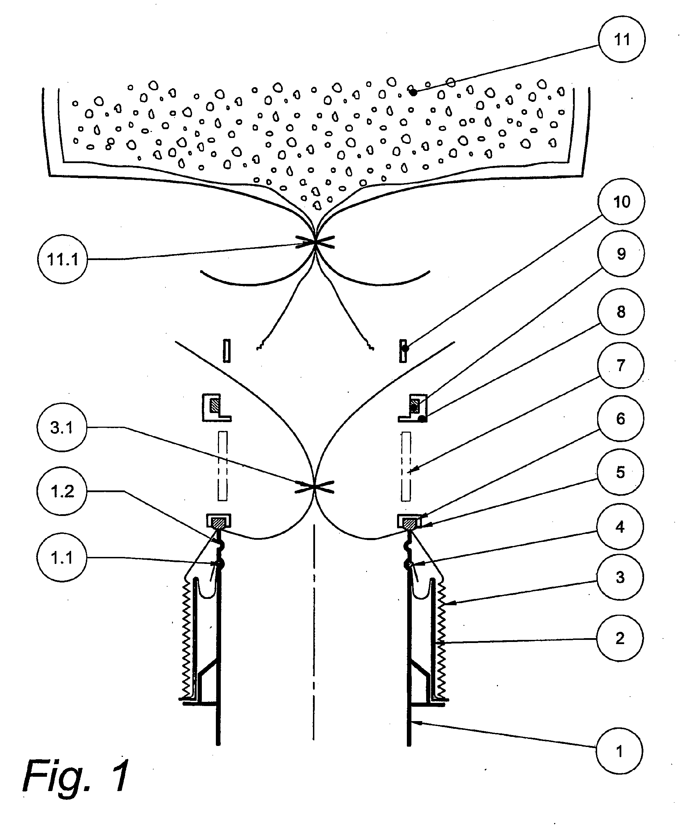

Zu Beginn des Entleerungsverfahrens wird, wie es in den Fig. 1 bis 9 dargestellt ist, ein Anschlussrohr 1, durch das hindurch ein über dem Anschlussrohr 1 mit Auslauf nach unten angebrachter flexibler Transportbehälter entleert wird, von einer Schlauchfolie 3 umschlossen und durch ein Abbinden der Schlauchfolie bei 3.1 verschlossen. Die Schlauchfolie erstreckt sich aus einem das Anschlussrohr 1 umgebenden Folienträger 2, in dem sie in einer für mehrere Entleerungsvorgänge ausreichenden Länge vorhanden ist ("Endlosfolie"). Die Folie wird zwischen einem in einer Dichtringaufnahme 6 am oberen Rand des Anschlussrohres sitzenden Axialdichtring 5 und dem oberen Rand des Anschlussrohres 1, gegen den er wirkt, hindurchgeführt und kann durch Ziehen in der benötigten Länge dem Folienträger 2 entnommen werden. Oberhalb des Füllrohrs 1 ist die Schlauchfolie 3 bei 3.1 zunächst abgebunden. Die Schlauchfolie ist dabei soweit aus dem Folienträger herausgezogen, dass sich oberhalb der Verschnürung ein trichterförmig ausbreitbares Endstück ergibt. Dieses Endstück wird in einen Radialblähring 9, der in einer Blähringaufnahme 8 sitzt, eingelegt und dort mit Hilfe eines als Einwegteil ausgebildeten Gegenrings 10, dessen Außendurchmesser in etwa dem Innendurchmessers des Radialblährings 9 entspricht, mit dem Auslaufrand eines über dem Füllrohr 1 angeordneten flexiblen Behälters (sogenannten Big-Bags beispielsweise) verklemmt, wobei zu diesem Zeitpunkt der zu entleerende Behälter, wie bei 11.1 gezeigt, noch zugebunden, ist (siehe Fig. 1 bis 3).

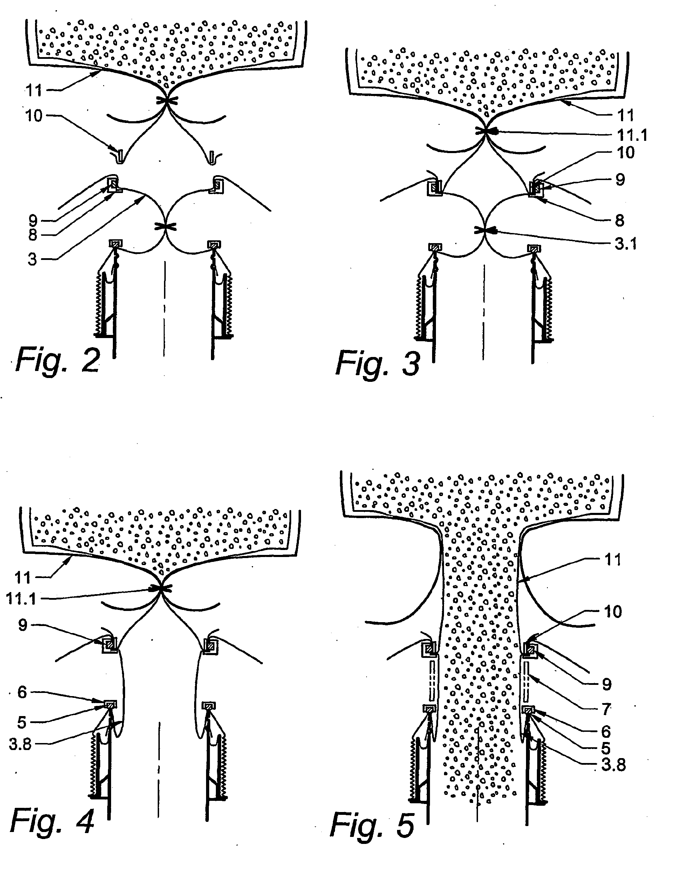

Daraufhin wird die Abbindung der Schlauchfolie bei 3.1 gelöst, was den in Fig. 4 gezeigten Zustand herbeiführt. Nachfolgend wird auch der zu entleerende Behälter bei 11.1 geöffnet und im Behälter enthaltendes Schüttgut fällt aus dem Behälter durch das Anschlussrohr 1 (Fig. 5).

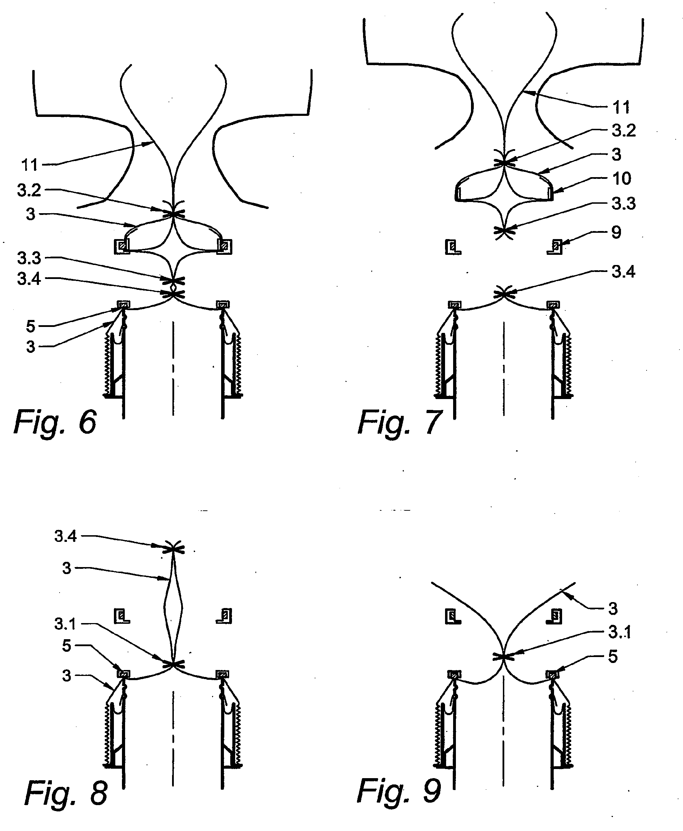

Eine Tasche 3.8 der Schlauchfolie legt sich dabei innen an das Anschlussrohr 1 an und schützt den oberen Bereich des Anschlussrohres 1 vor Produktanhaftungen. Bei großem Produktdruck kann die Schlauchfolie 3 von einem Stützrohr 7 (in Fig. 5 gestrichelt gezeichnet) gehalten werden. Sobald der flexible Behälter (Big-Bag) entleert und ggf. evakuiert ist, wird das freie Ende der Schlauchfolie 3 über der Blähringaufnahme 8 zusammengefasst und mit dem Auslauf des Behälters 11 bei 3.2 verbunden, insbesondere, wie gezeigt, verschnürt (Fig. 6).

Sodann wird der Axialdichtring 5 entlastet und Schlauchfolie 3 soweit nachgezogen, bis so weit saubere Schlauchfolie vorliegt, dass sie bei 3.4 und unmittelbar darüber bei 3.3 (siehe Fig. 6) im sauberen Bereich verschlossen, insbesondere, wie dargestellt, abgebunden, werden kann.

Nachfolgend wird der Radialblähring 9 entlastet und die Schlauchfolie zwischen den Abbindestellen 3.3. und 3.4 durchtrennt (siehe Fig. 7). Der flexible Behälter 11 kann nun kontaminationsfrei verworfen werden. Der Gegenring 10 ist ein Einwegteil, das mit verworfen wird.

Nachfolgend wird nochmals Schlauchfolie aus dem Folienträger 2 nachgezogen, bis unterhalb der Abbindestelle 3.4 ausreichend Folie für einen neuen Anschlusstrichter vorhanden ist, und sie direkt über dem Füllrohr bei 3.1 nochmals abgebunden werden kann (Fig. 8). Mit Entfernung der oberen Abbindung bei 3.4 kann die Schlauchfolie wieder zu einem Trichter ausgebreitet werden, womit der in Fig. 1 gezeigte Zustand wieder erreicht und die Vorrichtung für einen neuen Befüllvorgang bereit ist.

Auf diese Weise wird erreicht, dass nach dem Lösen des entleerten Gebindes vom Anschlussrohr 4 sowohl der kontaminierte Auslauf des Gebindes als auch das kontaminierte Anschlussrohr niemals offen, sondern durch umgebende Schutzfolie stets verschlossen ist.

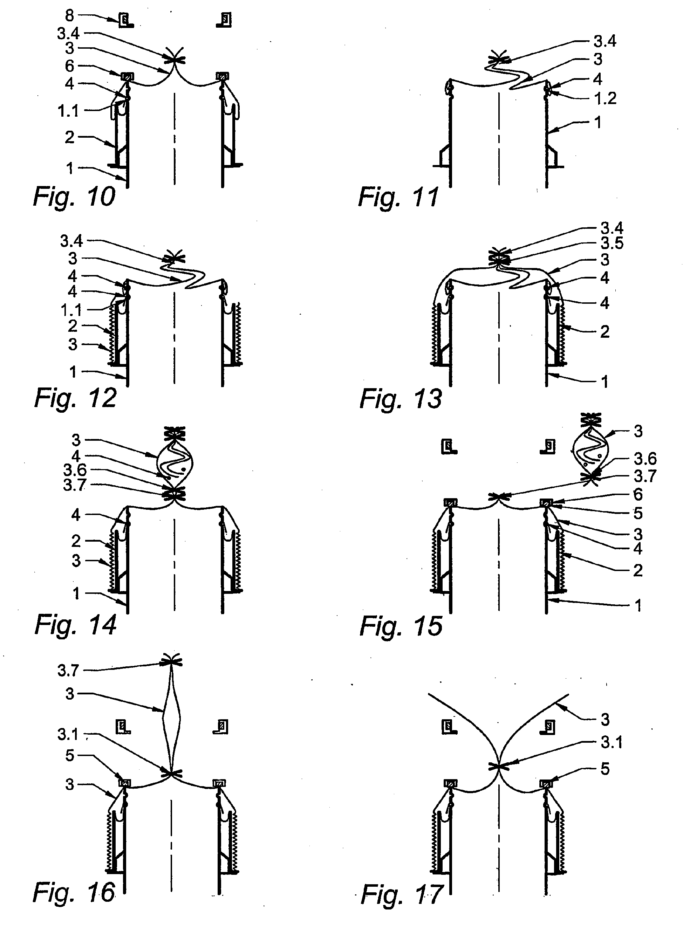

Die Fig. 10 bis 17 zeigen Verfahrensschritte ab einem Zeitpunkt, ab dem die im Folienträger 2 enthaltene restliche Folie nicht mehr für einen weiteren Entleerungsvorgang reicht. Die Restfolie muss entsorgt werden und gleichzeitig muss sichergestellt sein, dass weder die Restfolie in das Anschlussrohr 1 fallen kann, noch dass das ggf. kontaminierte Anschlussrohr oben unverschlossen ist.

Fig. 10 zeigt den Zustand entsprechend Fig. 7, nur mit dem Unterschied, dass der Schlauchfolienvorrat am Ende ist.

Wie in Fig. 11 gezeigt, wird der Axialdichtring 5, der die Schlauchfolie gegen den Füllrohrrand klemmt, entlastet und sowohl die Aufnahme 6 für den Axialdichtring 5 als auch Aufnahme 8 für den Blähring entfernt, damit der Folienträger 2 zugänglich ist und entfernt werden kann (Fig. 11), ein neuer Folienträger 2 mit neuer Folie wird angebracht (Fig. 12), und das Ende der Schlauchfolie des neuen Folienträgers 2 mit einem geeigneten elastischen Fixierring 4 am Anschlussrohr 1 befestigt. Sodann wird der Anfang der neuen Schlauchfolie über die alte Restfolie gezogen und beide Folien werden bei 3.5 unterhalb der Abbindestelle 3.4 abgebunden (Fig. 13). Sodann werden beide Folien gemeinsam mit dem elastischen Fixierring der alten Folie ineinander hochgezogen und die neue Schlauchfolie unterhalb der in ihr liegenden alten Schlauchfolie bei 3.6 und 3.7 zweimal abgebunden (Fig. 14). Nachfolgend erfolgt eine Durchtrennung der neuen Schlauchfolie zwischen den beiden Abbindestellen 3.6 und 3.7, so dass der Rest alte Schlauchfolie, verpackt in ein Stück neue Schlauchfolie verworfen werden kann (Fig. 15). Die Abbindestelle bei 3.7 verhindert, dass das abgeschnittene Paket mit der alten Schlauchfolie in das Anschlussrohr 1 fallen kann, und sorgt gleichzeitig dafür, dass das Anschlussrohr verschlossen ist.

Die Fig. 16 und 17 entsprechen den Fig. 8 und 9 und die zugehörigen Verfahrensschritte den anhand der Fig. 8 und 9 beschriebenen.

Bei einer Einzelsackentleerung ist es nicht erforderlich, Schlauchfolie für mehrere Entleerungsvorgänge vorzusehen. Das Anschlussrohr 1 wird dann, bei sonst gleicher konstruktiver Ausbildung der Teile, mit Schlauchfolie für einen einzigen Entleerungsvorgang umgeben.

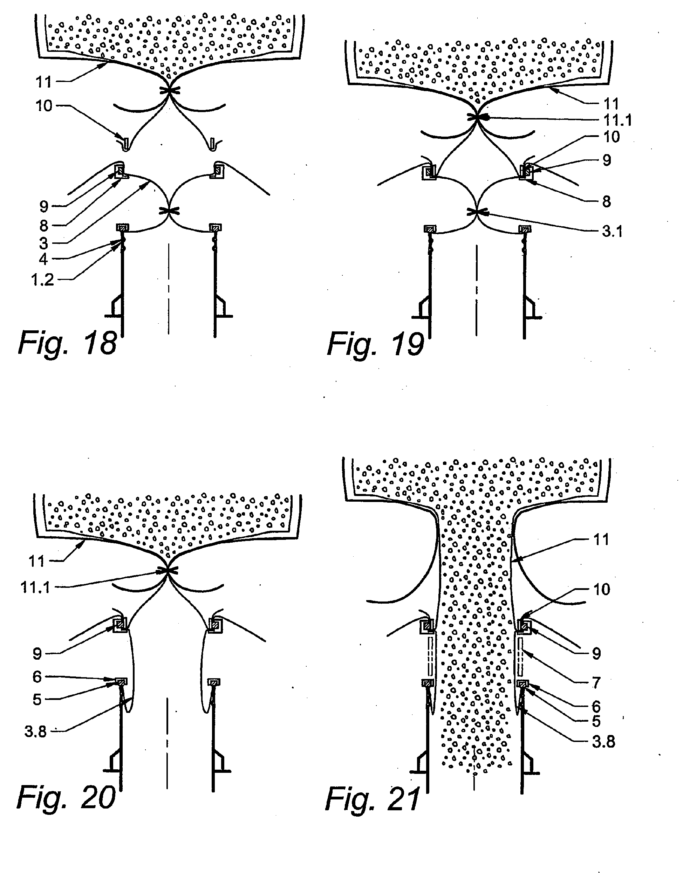

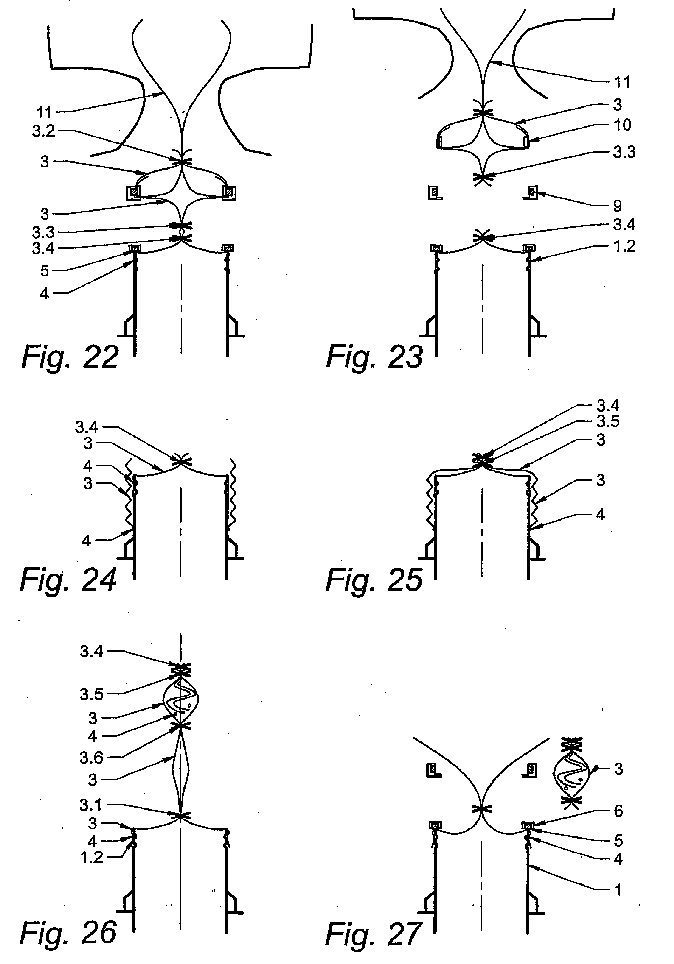

Die Verfahrensschritte für diesen Fall, einschließlich der Entsorgung der gebrauchten Schlauchfolie mit Hilfe einer neuen Schlauchfolie sind in den Fig. 18 bis 27 dargestellt. Hierbei entsprechen die Fig. 18 bis 21 den Fig. 2 bis 5, die Fig. 22 und 23 den Fig. 6 und 7, die Fig. 24 und 25 den Fig. 12 und 13 und die Fig. 26 und 27 den Fig. 14 bis 17 mit dem Unterschied, dass das die alte Folie enthaltende Paket erst zum Schluss abgetrennt wird.

Diese Ausführungsform hat den Vorteil, dass der Anschlusstrichter nicht produktberührt ist und somit vollkommen kontaminationsfrei ist und somit die Anbindung an den Auslauf des zu entleerenden Gebindes kontaminationsfrei erfolgt. Dies deshalb, weil eine neue Einzelfolie, abgeschirmt durch die alte Schlauchfolie, nicht mit dem unter Umständen kontaminierten Rand des Anschlussrohres in Berührung kommt. Die neue Schlauchfolie ist in gleicher Weise geschützt wie der Anfang einer Endlosfolie, die eine aufgebrauchte Endlosfolie ersetzt.

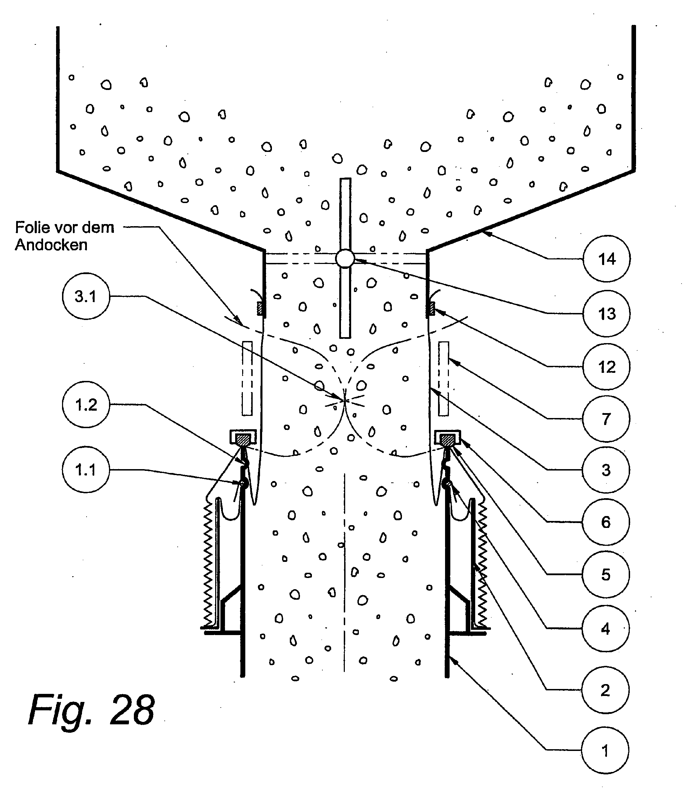

Fig. 28 zeigt das Verfahren in seiner Anwendung auf ein Gebinde mit starrem Auslauf, wobei das Gebinde als fester Transportbehälter (Container) 14 mit Verschlusskappe 13 im Behälter ausgebildet ist.

Auf den Radialblähring 9 mit der Blähringaufnahme 8 sowie den Gegenring 10 wird verzichtet. Der oben beschriebene Anschlusstrichter der Schlauchfolie 3 wird mittels eines Spannbandes 12 direkt am Behälterauslauf befestigt. Nach dem Lösen der Verschnürung an der Abbindestelle 3.1 kann des Behälters entleert werden.

Nach dem Entleeren wird Schlauchfolie, wie anhand von Fig. 6 beschrieben, nachgezogen, im sauberen Bereich zweimal abgebunden und dazwischen durchtrennt (Fig. 7). Auf diese Weise kann das Gebinde kontaminationsfrei abgetrennt werden.

Was das Wechseln des Folienträgers 2 anbelangt, so erfolgt dieser hier genauso wie oben bei Gebinden mit flexiblem Auslauf beschrieben.

Abgesehen von der Verschließstelle 3.1 können die anderen Verschließstellen 3.2-3.7 mit Vorteil beispielsweise auch durch Verschweißen oder auch eine andere permanente Art des Verschließen ausgebildet sein.

### Befüllverfahren

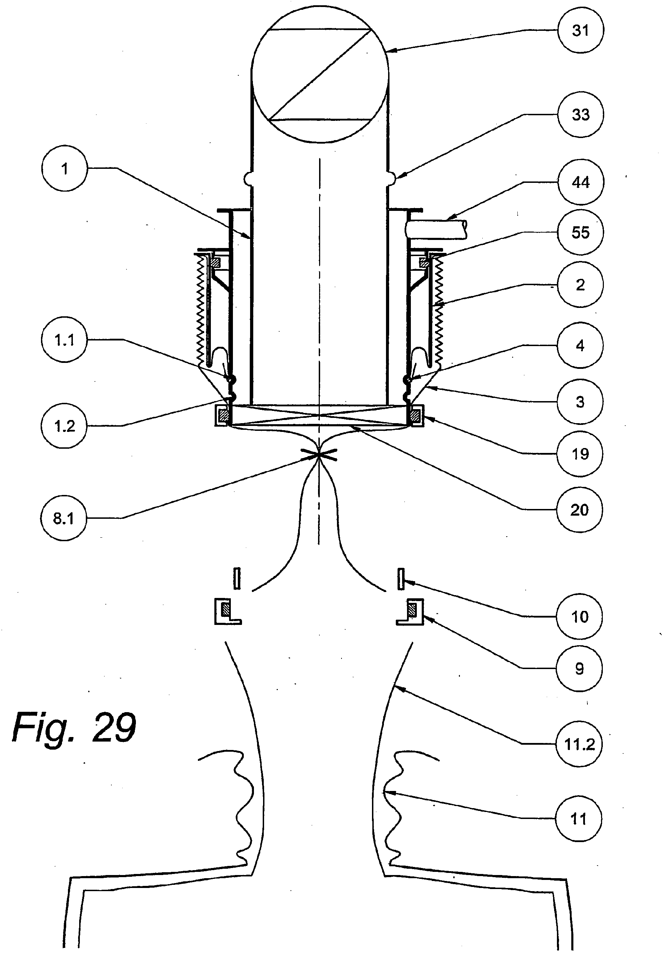

Zu Beginn des Befüllverfahrens wird, wie es in den Fig. 29 bis 39 dargestellt ist, ein Anschlussrohr 1, durch das hindurch ein darunter angebrachter flexibler Transportbehälter befüllt werden soll, von einer Schlauchfolie 3 umschlossen und durch ein Abbinden der Schlauchfolie bei 8.1 verschlossen. Zum Schutz vor nachfallendem Produkt und Minimierung von Produktverlust kann in das Anschlussrohr 1 noch ein Verschlussorgan 20 integriert sein. Die Schlauchfolie 3 erstreckt sich aus einem das Anschlussrohr umgebenden Folienträger 2, in dem sie in einer für mehrere Befüllvorgänge ausreichenden Länge vorhanden ist ("Endlosfolie"). Die Folie 3 wird zwischen einem am unteren Rand des Anschlussrohres sitzenden Radialdichtring 19 und dem Anschlussrohr 1 hindurchgeführt und kann durch Ziehen in der benötigten Länge dem Folienträger 2 entnommen werden. Unterhalb des Anschlussrohres 1 ist die Schlauchfolie bei 8.1 zunächst abgebunden. Die Schlauchfolie ist dabei so weit aus dem Folienträger herausgezogen, dass sich unterhalb der Verschnürung ein ausbreitbares Schlauchstück ergibt. In dieses Endstück wird der Gegenring 10 eingelegt. Anschließend kann der Einlauf 11.2 des flexiblen Transportbehälters 11 mit der Schutzfolie 3 und dem Gegenring 10 in dem Behältereinlauf-Radialdichtring 9 verklemmt und abgedichtet werden (siehe Fig. 29 bis 31).

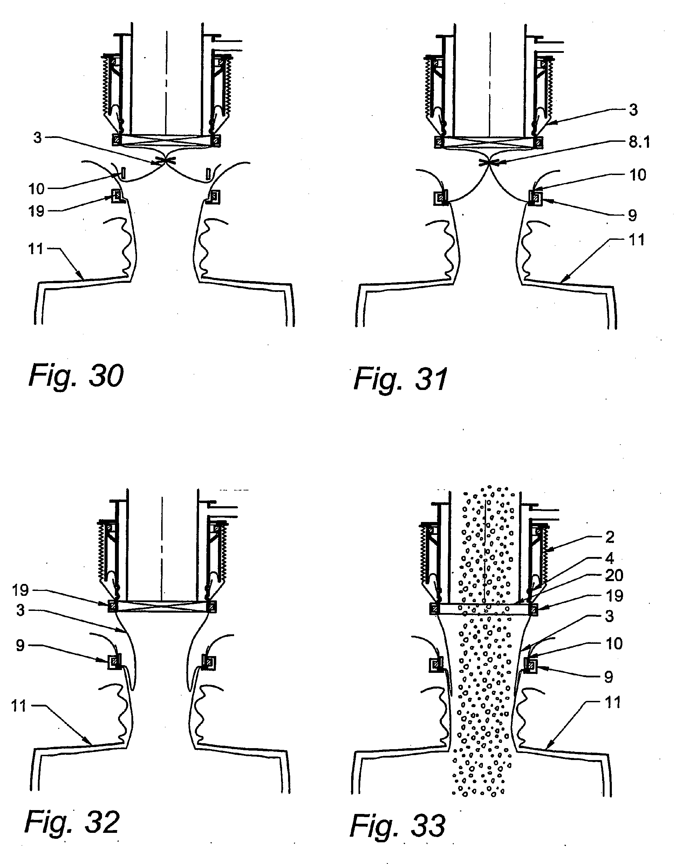

Durch Öffnen der Abbindung der Schlauchfolie bei 8.1 wird die Verbindung zwischen Anschlussrohr 1 und Transportbehältereinlauf 11.2 geöffnet. Nun kann nach Öffnen des Verschlussorganes 20 der Transportbehälter befüllt werden (Fig. 33). Dabei legt sich eine Tasche der Schlauchfolie innen an den Rand des Behältereinlaufs und schützt diesen von groben Produktanhaftungen.

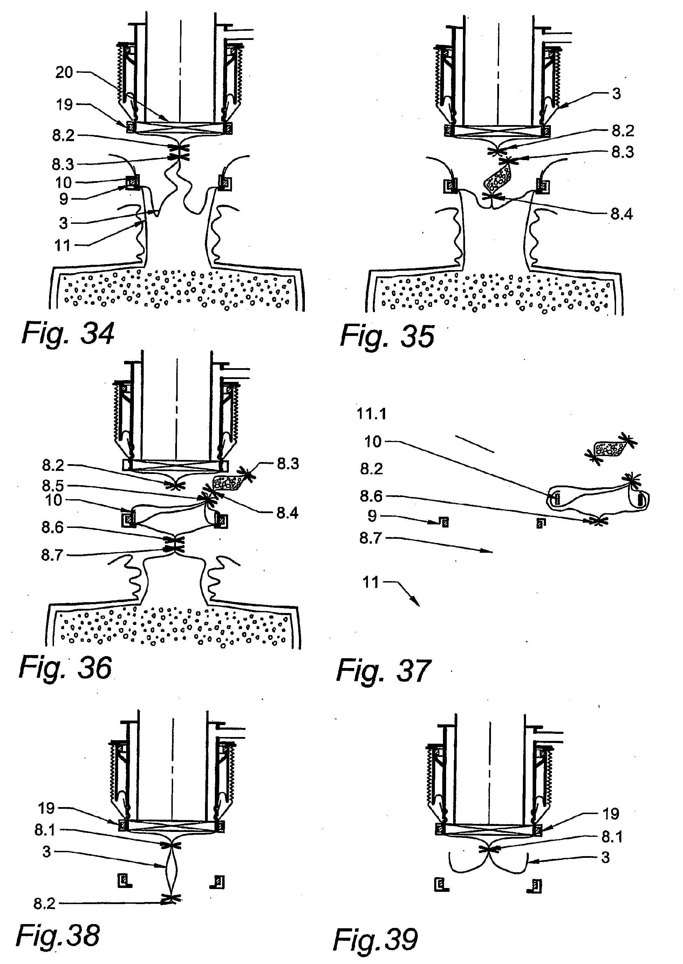

Sobald der flexible Behälter (Big-Bag) 11 fertig befüllt und das Verschlussorgan 20 geschlossen ist, wird der Radialdichtring 9 am Anschlussrohr 1 entlastet und frische Schlauchfolie 3 soweit nachgezogen, bis so weit saubere Schlauchfolie vorliegt, dass sie bei 8.2 und unmittelbar darunter bei 8.3 (siehe Fig. 34) im sauberen Bereich verschlossen, insbesondere, wie dargestellt, abgebunden werden kann.

Nach dem Trennen der Schlauchfolie 3 zwischen den Verschlüssen 8.2 und 8.3 kann, wenn nötig, eine Produktprobe von Hand aus dem Transportbehälter 11 entnommen und durch die Abbindung bei 8.4 in die Schlauchfolie eingeschlossen werden. Nachfolgend muss der Einlauf 11.2 des Transportbehälters 11 zunächst oberhalb des Radialdichtrings 9 mit Abbindung 8.5 und dann unterhalb des Radialdichtrings bei 8.6 und nochmals unmittelbar darunter bei 8.7 abgebunden werden. Sodann wird der Radialdichtring 9 entlastet und die Schlauchfolie zwischen den Abbindestellen 8.4 und 8.5 (Abtrennen des Probenbeutels) sowie zwischen 8.6 und 8.7 durchtrennt (siehe Fig. 37). Nun kann die Folientasche mit dem eingeschlossenem Gegenring 10 kontaminationsfrei verworfen werden.

Nachfolgend wird nochmals Schlauchfolie aus dem Folienträger 2 nachgezogen, bis oberhalb der Abbindestelle 8.2 ausreichend Folie für einen neuen Anschlusstrichter vorhanden ist und diese direkt unter dem Anschlussrohr 1 nochmals bei 8.1 abgebunden werden kann (Fig. 38). Mit Entfernung der unteren Abbindung bei 8.2 kann die Schlauchfolie 3 wieder zu einem Trichter ausgebreitet werden, womit der in Fig. 29 gezeigte Zustand wieder erreicht und die Vorrichtung für einen neuen Befüllvorgang bereit ist.

Auf diese Weise wird erreicht, dass nach dem Lösen des befüllten Gebindes 11 vom Anschlussrohr 1 sowohl der kontaminierte Einlauf des Gebindes als auch das kontaminierte Anschlussrohr niemals offen, sondern immer durch umgebende Schutzfolie verschlossen ist.

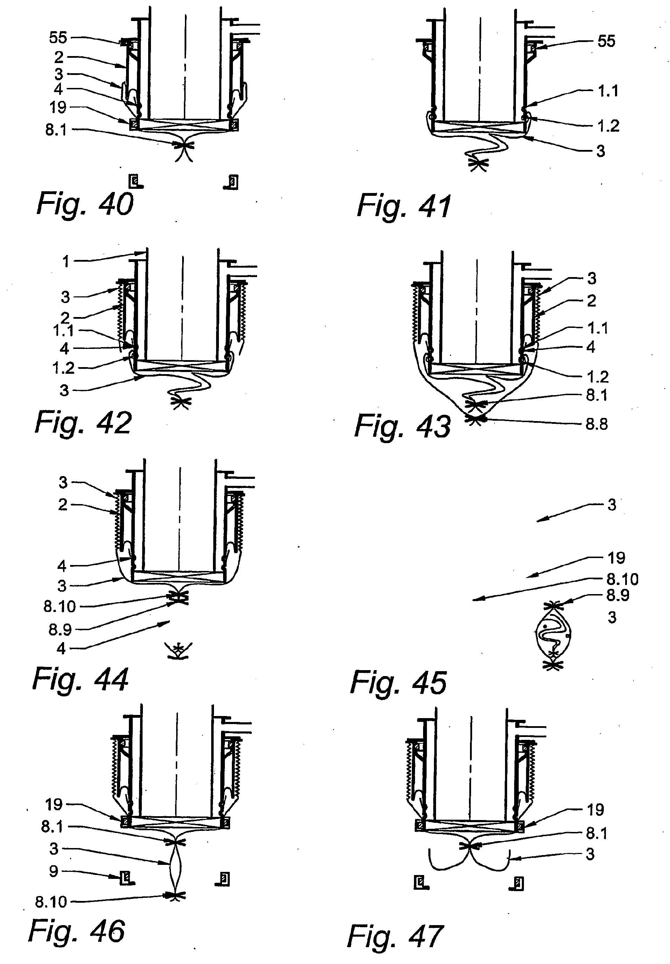

Die Fig. 40 bis 47 zeigen Verfahrensschritte ab einem Zeitpunkt, ab dem die im Folienträger 1 enthaltene restliche Folie nicht mehr für einen weiteren Befüllvorgang reicht. Die Restfolie muss entsorgt werden und gleichzeitig muss sichergestellt sein, dass das Füllrohr zu keinem Zeitpunkt unverschlossen ist.

Fig. 40 zeigt den Zustand entsprechend Fig. 37, nur mit dem Unterschied, dass der Schlauchfolienvorrat am Ende ist.

Wie in Fig. 41 gezeigt, werden der Radialdichtring 19 und der Behältereinlauf-Radialdichtring 9 entfernt, damit der Folienträger 2 zugänglich ist und entfernt werden kann. Ein neuer Folienträger 2 mit neuer Folie 3 wird angebracht (Fig. 42) und das Ende der Schlauchfolie mit einem geeigneten elastischen Fixierring 4 am Anschlussrohr 1 befestigt. Sodann wird der Anfang der neuen Schlauchfolie über die alte Restfolie gezogen und bei 8.8 verschlossen (Fig. 43). Sodann wird die alte Folie mit ihrem Fixierring abgezogen und durch die Verschnürung der neuen Folie bei 8.9 in einer Folientasche eingeschlossen und die Schlauchfolie in kurzem Abstand oberhalb 8.9 bei 8.10 nochmals abgebunden (Fig. 44). Nach Durchtrennung der Schlauchfolie 3 zwischen den Abbindestellen 8.9 und 8.10 kann der alte Folienrest mit der ihn umgebenden neuen Schutzfolie verworfen werden. Jetzt können der Radialdichtring 19 und der Behältereinlauf-Radialdichtring 9 wieder in Arbeitsposition gebracht werden.

Fig. 46 und 47 entsprechen den Fig. 38 und 39 und die zugehörigen Verfahrensschritte zur Bildung eines neuen Anschlußtrichters den anhand der Fig. 38 und 39 beschriebenen.

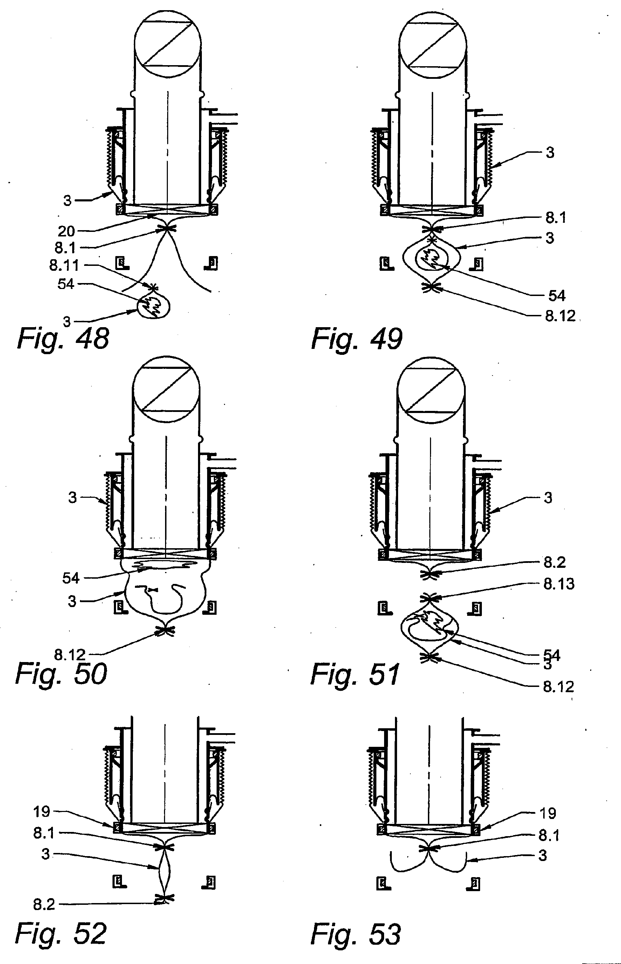

Fig. 48 bis 51 zeigen notwendige Verfahrensschritte falls durch Produktanhaftungen die Reinigung der Unterseite des Verschlussorgans 20 notwendig wird.

Fig. 48 zeigt den Zustand entsprechend Fig. 39 nach Abschluss eines Befüllvorganges. Ein Reinigungstuch wird in einer geeigneten sauberen Umgebung, mit oder ohne Reinigungsmitel in einen Folienbeutel verpackt. Dieser Beutel kann nun gemäß Fig. 49 in den Anschlusstrichter der Schlauchfolie 3 mit Abbindung 8.12 eingeschlossen werden. Nach dem Lösen der Abbindung 8.1 und dem Öffnen des Reinigungsbeutels kann die Oberfläche des Verschlussorgans 20 abgewischt werden. Anschließend wird die Schutzfolie 3 kurz unter dem Anschlussrohr wieder bei 8.2 und 8.13 abgebunden. Die Schlauchfolie wird zwischen den Abbindestellen durchtrennt und die Folientasche mit den Reinigungsutensilien verworfen (Fig. 50 und 51).

Die Fig. 52 und 53 entsprechen den Fig. 38 und 39 und die zugehörigen Verfahrensschritte zur Bildung eines neuen Anschlußtrichters den anhand der Fig. 38 und 39 beschriebenen.

Abgesehen von der Verschließstelle 8.1 können die anderen Verschließstellen 8.2 - 8.13 mit Vorteil beispielsweise auch durch Verschweißen oder auch eine andere permanente Art des Verschließens ausgebildet sein.

### Bezugszeichen:

- 1: Anschlussrohr

- 1.1: Sicke für Schutzfolie (Endlosfolienende)
- 1.2: Sicke für Schutzfolie (Folienwechsel)

- 2: Folienträger
- 3: Schlauchfolie

- 3.1-3.7: Abbinde- bzw. Verschließstellen
- 3.8: Folientasche
- 8.1-8.12: Abbinde- bzw. Verschließstellen

- 4: elastischer Fixierring
- 5: Axialdichtring (statisch oder dynamisch)
- 6: Dichtringaufnahme
- 7: Stützrohr
- 8: Blähringaufnahme
- 9: Radialblähring (Radialdichtring)
- 10: Gegenring (Einweg)
- 11: Flexibler Transportbehälter (z.B. Big-Bag)

- 11.1: Verschließstelle am Transportbehälter
- 11.2: Transportbehältereinlauf

- 12: Spannband
- 13: Verschlusskappe (Nachrieselschutz)
- 14: fester Transportbehälter (Container)
- 31: Dosierorgan, Förderorgan, Anlage
- 33: flexible Waagenentkopplung
- 44: Be- und Entlüftung
- 54: Reinigungstuch für Verschlussorgan
- 55: Fixierung für Folienträger

## Patentansprüche

1. Verfahren zur kontaminationsvermeidenden Entleerung von Schüttgut aus einem Behälter mit flexiblem Auslauf in eine nachgelagerte Einrichtung über ein Anschlussrohr (1), wobei das Verfahren folgende Verfahrensschritte aufweist:
Anordnen des Behälters mit an einer Abbindestelle (11.1) abgebundenem Auslauf oberhalb des Anschlussrohres,
Anordnen einer Schlauchfolie (3) um das Anschlussrohr herum so, dass sie gegen den einlaufseitigen Rand des Anschlussrohres dichtend anliegt,
Abbinden der Schlauchfolie oberhalb des Anschlussrohres so, dass oberhalb der Abbindestelle (3.1) ein trichterförmig aufweitbares Ende der Schlauchfolie verbleibt,
klemmendes Verbinden von Auslauf des flexiblen Behälters und der Schlauchfolie so, dass über der Klemmverbindung freie Schlauchfolie verbleibt,
Lösen der Abbindestellen (11.1, 3.1) von Auslauf und Schlauchfolie und Entleeren des Schüttguts,
Zusammenfassen (3.2) des oberhalb der Klemmstelle verbliebenen freien Endes der Schlauchfolie gegen den Behälterauslauf und Festlegen daran,
Nachziehen von Schlauchfolie aus einem Schlauchfolienvorrat, bis oberhalb des Anschlussrohres (1) saubere Schlauchfolie (3) zur Verfügung steht,
Verschließen der Schlauchfolie an zwei benachbarten Verschließstellen (3.3, 3.4) im sauberen Bereich,
Durchtrennen der Schlauchfolie zwischen den beiden Verschließstellen (3.3, 3.4),
Nachziehen von Schlauchfolie aus dem Schlauchfolienvorrat und erneutes Abbinden derselben an einer Abbindestelle (3.1) im Abstand von der Durchtrennungsstelle,
Entfernen der Verschließstelle (3.4) im Bereich der Durchtrennungsstelle und Ausbreiten der Schlauchfolie zwischen der Durchtrennungsstelle und der im Abstand von der Durchtrennungsstelle befindlichen Abbindestelle (3.1) zu einer Trichterform.

2. Verfahren nach Anspruch 1, **dadurch gekennzeichnet, dass** zur Herstellung des dichtenden Anliegens der Schlauchfolie gegen den einlaufseitigen Rand des Anschlussrohres (1) ein über die Schlauchfolie gegen den einlaufseitigen Rand des Anschlussrohres wirkender Axialdichtring (5) verwendet wird.

3. Verfahren nach einem der vorhergehenden Ansprüche, **dadurch gekennzeichnet, dass** zur Aufnahme des Schlauchfolienvorrats, ein das Anschlussrohr (1) umgebender Folienträger (2) verwendet wird.

4. Verfahren nach Anspruch 3, **dadurch gekennzeichnet, dass** das Ende der Schlauchfolie freigelegt und mit einem elastischen Fixierring (4) gegen eine am Umfang des Anschlussrohres (1) verlaufende erste Sicke (1.1) geklemmt wird.

5. Verfahren nach einem der vorhergehenden Ansprüche, **dadurch gekennzeichnet, dass** zum klemmenden Verbinden von Auslauf des flexiblen Behälters und der Schlauchfolie ein die Verbindungsstelle von außen umgebender Radialblähring (9) und ein die Verbindungsstelle von innen abstützender Gegenring (10) verwendet wird.

6. Verfahren nach Anspruch 4, wobei, wenn der Schlauchfolienvorrat zu Ende geht, nach dem Durchtrennen der Schlauchfolie zwischen den beiden Verschließstellen (3.3, 3.4) die Schlauchfolie aus dem Schlauchfolienvorrat nicht mehr nachgezogen wird und folgende Verfahrensschritte ausgeführt werden:
Entfernen des Axialdichtrings (5),
Ziehen des elastischen Fixierrings (4) mit der Schlauchfolie aus der ersten Sicke (1.1) in eine über der ersten Sicke (1.1) liegende zweite Sicke (1.2),
Anbringen eines neuen Folienträgers (2) mit neuer Schlauchfolie und Klemmen des Endes der neuen Schlauchfolie mit einem elastischen Fixierring (4) in der ersten Sicke (1.1) gegen das Anschlussrohr (1),
Herausziehen des Anfangs der neuen Schlauchfolie aus dem Folienträger (2),
Verschließen der neuen Schlauchfolie gegen die alte Schlauchfolie an einer unter der Verschließstelle (3.4) der alten Schlauchfolie liegenden Verschließstelle (3.5),
Hochziehen der neuen Schlauchfolie mit der mit ihr verbundenen alten Schlauchfolie, bis das Ende der alten Schlauchfolie aus der zweiten Sicke (1.2) freikommt,
Verschließen der neuen Schlauchfolie unterhalb des Endes der alten Schlauchfolie an zwei zueinander benachbarten Verschließstellen (3.6, 3.7),
Durchtrennen der neuen Schlauchfolie zwischen den beiden Verschließstellen (3.6, 3.7), Verwerfen der in der neuen Schlauchfolie verpackten alten Schlauchfolie,
weiteres Hochziehen der neuen Schlauchfolie und Abbinden der neuen Schlauchfolie an einer von der am Ende verbleibenden Verschließstelle (3.7) im Abstand liegenden Abbindestelle (3.1),
Entfernen der endseitigen Verschließstelle (3.7) und Ausbreiten der neuen Schlauchfolie zu einer Trichterform.

7. Verfahren zur kontaminationsvermeidenden Entleerung von Schüttgut aus einem Behälter mit flexiblem Auslauf in eine nachgelagerte Einrichtung über ein Anschlussrohr (1), wobei das Verfahren folgende Verfahrensschritte aufweist:
Anordnen Behälters mit an einer Abbindestelle (11.1) abgebundenem Auslauf oberhalb des Anschlussrohres,
Anordnen einer für einen Umfüllvorgang ausreichenden Schlauchfolie (3) um das Anschlussrohr herum so, dass sie gegen den einlaufseitigen Rand des Anschlussrohres dichtend anliegt,
Abbinden der Schlauchfolie oberhalb des Anschlussrohres so, dass oberhalb der Abbindestelle (3.1) ein trichterförmig aufweitbares Ende der Schlauchfolie verbleibt,
klemmendes Verbinden von Auslauf des flexiblen Behälters und der Schlauchfolie so, dass über der Klemmverbindung freie Schlauchfolie verbleibt,
Lösen der Abbindestellen (11.1, 3.1) von Auslauf und Schlauchfolie und Entleeren des Schüttguts,
Zusammenfassen (3.2) des oberhalb der Klemmstelle verbliebenen freien Endes der Schlauchfolie gegen den Behälterauslauf und Festlegen daran,
Nachziehen der Schlauchfolie bis oberhalb des Anschlussrohres (1) saubere Schlauchfolie (3) zur Verfügung steht,
Verschließen der Schlauchfolie an zwei benachbarten Verschließstellen (3.3, 3.4) im sauberen Bereich,
Durchtrennen der Schlauchfolie zwischen den beiden Verschließstellen (3.3, 3.4),
Anbringen einer neuen Schlauchfolie und Klemmen des Endes der neuen Schlauchfolie gegen das Anschlussrohr unterhalb der alten Schlauchfolie,
Herausziehen des Anfangs der neuen Schlauchfolie,
Verschließen der neuen Schlauchfolie gegen die alte Schlauchfolie an einer unter der Verschließstelle (3.4) der alten Schlauchfolie liegenden Verschließstelle (3.5),
Hochziehen der neuen Schlauchfolie mit der mit ihr verbundenen alten Schlauchfolie, bis das Ende der alten Schlauchfolie freikommt,
Verschließen der neuen Schlauchfolie unterhalb des Endes der alten Schlauchfolie an einer Verschließstelle (3.6),
Durchtrennen der neuen Schlauchfolie unter der Verschließstelle (3.6), Verwerfen der in der neuen Schlauchfolie verpackten alten Schlauchfolie,
weiteres Hochziehen der neuen Schlauchfolie und Abbinden der Schlauchfolie an einer von der am Ende verbleibenden Verschließstelle (3.6) im Abstand liegenden Abbindestelle (3.1),
Ausbreiten der neuen Schlauchfolie zu einem Trichter.

8. Verfahren zur kontaminationsvermeidenden Entleerung von Schüttgut aus einem Transportbehälter mit starrem Auslauf in eine nachgelagerte Einrichtung über ein Anschlussrohr (1), wobei das Verfahren folgende Verfahrensschritte aufweist:
Anordnen des Transportbehälters in verschlossenem Zustand oberhalb des Anschlussrohres,
Anordnen einer Schlauchfolie (3) um das Anschlussrohr herum so, dass sie gegen den einlaufseitigen Rand des Anschlussrohres dichtend anliegt,
Abbinden der Schlauchfolie oberhalb des Anschlussrohres so, dass oberhalb der Abbindestelle (3.1) ein trichterförmig ausbreitbares Ende der Schlauchfolie verbleibt,
klemmendes Verbinden von starrem Auslauf des Behälters und dem Anfang der Schlauchfolie,
Lösen der Abbindestelle (3.1) der Schlauchfolie und Entleeren des Schüttguts,
Nachziehen von Schlauchfolie aus einem Schlauchfolienvorrat, bis oberhalb des Anschlussrohres (1) saubere Schlauchfolie (3) zur Verfügung steht,
Verschließen der Schlauchfolie an zwei benachbarten Verschließstellen (3.3, 3.4) im sauberen Bereich,
Durchtrennen der Schlauchfolie zwischen den beiden Verschließstellen (3.3, 3.4),
Nachziehen von Schlauchfolie aus dem Schlauchfolienvorrat und erneutes Abbinden derselben an einer Abbindestelle (3.1) im Abstand von der Durchtrennungsstelle,
Entfernen der Abbindestelle (3.4) im Bereich der Durchtrennungsstelle und Ausbreiten der Schlauchfolie zwischen der Durchtrennungsstelle und der im Abstand von der Durchtrennungsstelle befindlichen Abbindestelle (3.1) zu einer Trichterform.

9. Verfahren nach Anspruch 8, **dadurch gekennzeichnet, dass** zur Herstellung des dichtenden Anliegens der Schlauchfolie gegen den einlaufseitigen Rand des Anschlussrohres (1) ein über die Schlauchfolie gegen den einlaufseitigen Rand des Anschlussrohres wirkender Axialdichtring (5) verwendet wird.

10. Verfahren nach einem der Ansprüche 8 und 9, **dadurch gekennzeichnet, dass** zur Aufnahme des Schlauchfolienvorrats, ein das Anschlussrohr (1) umgebender Folienträger (2) verwendet wird.

11. Verfahren nach Anspruch 10, **dadurch gekennzeichnet, dass** das Ende der Schlauchfolie freigelegt und mit einem elastischen Fixierring (4) gegen eine am Umfang des Anschlussrohres (1) verlaufende erste Sicke (1.1) geklemmt wird.

12. Verfahren nach Anspruch 11, wobei, wenn der Schlauchfolienvorrat zu Ende geht, nach dem Durchtrennen der Schlauchfolie zwischen den beiden Verschließstellen (3.3, 3.4) die Schlauchfolie aus dem Schlauchfolienvorrat nicht mehr nachgezogen wird und folgende Verfahrensschritte ausgeführt werden:
Entfernen des Axialdichtrings (5),
Ziehen des elastischen Fixierrings (4) mit der Schlauchfolie aus der ersten Sicke (1.1) in eine über der ersten Sicke (1.1) liegende zweite Sicke (1.2),
Anbringen eines neuen Folienträgers (2) mit neuer Schlauchfolie und Klemmen des Endes der neuen Schlauchfolie mit einem elastischen Fixierring (4) in der ersten Sicke (1.1) gegen das Anschlussrohr (1),
Herausziehen des Anfangs der neuen Schlauchfolie aus dem Folienträger (2),
Verschließen der neuen Schlauchfolie gegen die alte Schlauchfolie an einer unter der Verschließstelle (3.4) der alten Schlauchfolie liegenden Verschließstelle (3.5),
Hochziehen der neuen Schlauchfolie mit der mit ihr verbundenen alten Schlauchfolie, bis das Ende der alten Schlauchfolie aus der zweiten Sicke (1.2) freikommt,
Verschließen der neuen Schlauchfolie unterhalb des Endes der alten Schlauchfolie an zwei zueinander benachbarten Verschließstellen (3.6, 3.7),
Durchtrennen der neuen Schlauchfolie zwischen den beiden Verschließstellen (3.6, 3.7), Verwerfen der in der neuen Schlauchfolie verpackten alten Schlauchfolie,
weiteres Hochziehen der neuen Schlauchfolie und Abbinden der neuen Schlauchfolie an einer von der am Ende verbleibenden Verschließstelle (3.7) im Abstand liegenden Abbindestelle (3.1),
Entfernen der endseitigen Verschließstelle (3.7) und Ausbreiten der neuen Schlauchfolie zu einer Trichterform.

13. Verfahren nach einem der vorhergehenden Ansprüche, **dadurch gekennzeichnet, dass** die Verschließstellen (3.2-3.7) als Abbindestellen ausgebildet werden.

14. Verfahren nach einem der Ansprüche 1-12, **dadurch gekennzeichnet, dass** die Verschließstellen (3.2-3.7) als Verschweißungen ausgebildet werden.

15. Verfahren zur kontaminationsvermeidenden Einfüllung von Schüttgut in einen Behälter mit flexiblem Einlauf aus einer vorgelagerten Einrichtung über ein Anschlussrohr (1), wobei das Verfahren folgende Verfahrensschritte aufweist:
Anordnen des Behälters mit offenem Einlauf unterhalb des Anschlussrohres,
Anordnen einer Schlauchfolie (3) um das Anschlussrohr herum so, dass sie gegen den einlaufseitigen Rand des Anschlussrohres dichtend anliegt,
Abbinden der Schlauchfolie unterhalb des Anschlussrohres so, dass unterhalb der Abbindestelle (8.1) ein trichterförmig aufweitbares Ende der Schlauchfolie verbleibt,
klemmendes Verbinden von Einlauf des flexiblen Behälters und der Schlauchfolie so, dass über der Klemmverbindung ein freies Ende des Einlaufs verbleibt,
Lösen der Abbindestelle (8.1) der Schlauchfolie und Befüllen des Behälters mit Schüttgut,
Nachziehen von Schlauchfolie aus einem Schlauchfolienvorrat, bis unterhalb des Anschlussrohres (1) saubere Schlauchfolie (3) zur Verfügung steht,
Verschließen der Schlauchfolie an zwei benachbarten Verschließstellen (8.2, 8.3) im sauberen Bereich,
Durchtrennen der Schlauchfolie zwischen den beiden Verschließstellen (8.2, 8.3),
Zusammenfassen (8.5) des oberhalb der Klemmstelle verbliebenen freien Endes des Einlaufs gegen die Schlauchfolie und Festlegen daran,
Verschließen des Einlaufs unterhalb der Klemmverbindung an zwei zueinander benachbarten Stellen (8.6, 8.7) und Durchtrennen des Einlaufs zwischen diesen,
Nachziehen von Schlauchfolie aus dem Schlauchfolienvorrat und erneutes Abbinden derselben an einer Abbindestelle (8.1) im Abstand von der Durchtrennungsstelle der Schlauchfolie,
Entfernen der Verschließstelle (8.2) im Bereich der Durchtrennungsstelle der Schlauchfolie und Ausbreiten der Schlauchfolie zwischen der Durchtrennungsstelle und der im Abstand von der Durchtrennungsstelle befindlichen Abbindestelle (8.1) zu einer Trichterform.

16. Verfahren nach Anspruch 15, **dadurch gekennzeichnet, dass** zur Herstellung des dichtenden Anliegens der Schlauchfolie gegen das auslaufseitige Ende des Anschlussrohres (1) ein über die Schlauchfolie gegen das auslaufseitige Ende des Anschlussrohres wirkender Radialdichtring (19) verwendet wird.

17. Verfahren nach Anspruch 15 oder 16, **dadurch gekennzeichnet, dass** zur Aufnahme des Schlauchfolienvorrats, ein das Anschlussrohr (1) umgebender Folienträger (2) verwendet wird.

18. Verfahren nach Anspruch 17, **dadurch gekennzeichnet, dass** das Ende der Schlauchfolie freigelegt und mit einem elastischen Fixierring (4) gegen eine am Umfang des Anschlussrohres (1) verlaufende erste Sicke (1.1) geklemmt wird.

19. Verfahren nach einem der Ansprüche 15 - 18, **dadurch gekennzeichnet, dass** zum klemmenden Verbinden von Einlauf des flexiblen Behälters und der Schlauchfolie ein die Verbindungsstelle von außen umgebender Radialblähring (9) und ein die Verbindungsstelle von innen abstützender Gegenring (10) verwendet wird.

20. Verfahren nach Anspruch 18, wobei, wenn der Schlauchfolienvorrat zu Ende geht, nach dem Durchtrennen der Schlauchfolie zwischen den beiden Verschließstellen (8.2, 8.3) die Schlauchfolie aus dem Schlauchfolienvorrat nicht mehr nachgezogen wird und folgende Verfahrensschritte ausgeführt werden:
Entfernen des Radialdichtrings (19),
Ziehen des elastischen Fixierrings (4) mit der Schlauchfolie aus der ersten Sicke (1.1) in eine unter der ersten Sicke (1.1) liegende zweite Sicke (1.2),
Anbringen eines neuen Folienträgers (2) mit neuer Schlauchfolie und Klemmen des Endes der neuen Schlauchfolie mit einem elastischen Fixierring (4) in der ersten Sicke (1.1) gegen das Anschlussrohr (1),
Herausziehen des Anfangs der neuen Schlauchfolie aus dem Folienträger (2),
Verschließen der neuen Schlauchfolie an einer unter der Verschließstelle (8.1) der alten Schlauchfolie liegenden Verschließstelle (8.8), Herunterziehen der neuen Schlauchfolie mit der alten Schlauchfolie, bis das Ende der alten Schlauchfolie aus der zweiten Sicke (1.2) freikommt,
Verschließen der neuen Schlauchfolie oberhalb des Endes der alten Schlauchfolie an zwei zueinander benachbarten Verschließstellen (8.9, 8.10),
Durchtrennen der neuen Schlauchfolie zwischen den beiden Verschließstellen (8.9, 8.10), Verwerfen der in der neuen Schlauchfolie verpackten alten Schlauchfolie,
weiteres Herunterziehen der neuen Schlauchfolie und Abbinden der neuen Schlauchfolie an einer von der am Ende verbleibenden Verschließstelle (8.10) im Abstand liegenden Abbindestelle (8.1),
Entfernen der endseitigen Verschließstelle (8.10) und Ausbreiten der neuen Schlauchfolie zu einer Trichterform.

## Claims

1. A method for emptying bulk goods, without contamination, from a container with a flexible outlet into a device mounted after it, via a connection tube (1), wherein the method has the following method steps:
arrangement of the container with an outlet tied to a tying point (11.1) above the connection tube,
arrangement of a hose film (3) around the connection tube, so that it rests against the edge of the connection tube on the inlet side so that it seals,
tying the hose film above the connection tube so that one end of the hose film, which can be widened in the shape of a funnel, remains above the tying point (3.1),
clamping connection of the outlet of the flexible container and the hose film so that free hose film remains over the clamp connection, detachment of the tying points (11.1, 3.1) from the outlet and hose film and emptying of the bulk goods,
tying (3.2) of the free end of the hose film remaining above the clamping point to the container outlet and its securing to it,
pulling hose film out of a hose film supply until clean hose film (3) is available above the connection tube (1),
sealing of the hose film at two adjacent sealing points (3.3, 3.4) in the clean region,
cutting of the hose film between the two sealing point (3.3, 3.4), pulling of hose film out of the hose film supply and tying the same again at a tying point (3.1) at a distance from the cutting point,
removing the sealing point (3.4) in the region of the cutting point and widening of the hose film between the cutting point and the tying point (3.1) located at a distance from the cutting point to form a funnel shape.

2. The method according to Claim 1, **characterised in that** an axial sealing ring(5), acting against the edge of the connection tube on the inlet side above the hose film, is used to make the sealing contact of the hose film against the edge of the connection tube (1) on the inlet side.

3. The method according to any one of the preceding claims, **characterised in that** a film carrier (2) surrounding the connection tube (1) is used to receive the hose film supply.

4. The method according to Claim 3, **characterised in that** the end of the hose film is revealed and is clamped with an elastic fixing ring (4) against a first bead (1.1) running around the periphery of the connection tube (1).

5. The method according to any one of the preceding claims, **characterised in that** a radial expansion ring (9) surrounding the connection point on the outside and a counter ring(10) supporting the connection point on the inside are used for the clamping connection of the outlet of the flexible container and the hose film.

6. The method according to Claim 4, wherein, when the hose film supply is used up, the hose film is no longer pulled out of the hose film supply and the following method steps are carried out after the hose film has been cut between the two sealing points (3.3, 3.4):
removing the axial sealing ring (5),
pulling the elastic fixing ring (4), with the hose film , out of the first bead (1.1) into a second bead (1.2) located above the first bead (1.1),
fitting a new film carrier (2) with new hose film, and clamping the end of the new hose film with an elastic fixing ring (4) in the first bead (1.1) against the connection tube (1),
pulling the beginning of the new hose film out of the film carrier (2),
sealing the new hose film against the old hose film at a sealing point (3.5) located underneath the sealing point (3.4) of the old hose film,
pulling up the new hose film with the old hose film connected to it until the end of the old hose film is released from the second bead (1.2),
sealing the new hose film underneath the end of the old hose film at two adjacent sealing points (3.6, 3,7),
cutting the new hose film between the two sealing points (3.6, 3.), disposing of the old hose film packed in the new hose film,
further pulling up of the new hose film and tying the new hose film at a tying point (3.1) located at a distance from the sealing point (3.7) remaining at the end,
removing the end sealing point (3.7) and widening of the new hose film to form a funnel shape.

7. A method for emptying bulk goods, without contamination, from a container with a flexible outlet into an after-mounted device via a connection tube (1), wherein the method has the following method steps:
arrangement of the container with an outlet tied to a tying point (11.1) above the connection tube,
arrangement of a hose film (3) sufficient for one refilling process around the connection tube, so that it rests against the edge of the connection tube on the inlet side so that it seals,
tying the hose film above the connection tube so that one end of the hose film, which can be widened in the shape of a funnel, remains above the tying point (3.1),
clamping connection of the outlet of the flexible container and the hose film so that free hose film remains over the clamp connection,
detachment of the tying points (11.1, 3.1) from the outlet and hose film and emptying of the bulk goods,
tying (3.2) of the free end of the hose film remaining above the clamping point to the container outlet and its securing to it,
pulling the hose film until clean hose film (3) is available above the connection tube (1),
sealing of the hose film at two adjacent sealing points (3.3, 3.4) in the clean region,
cutting of the hose film between the two sealing point (3.3, 3.4),
fitting a new hose film and clamping the end of the new hose film against the connection tube underneath the old hose film,
pulling out the beginning of the new hose film,
sealing the new hose film against the old hose film at a sealing point (3.5) located underneath the sealing point (3.4) of the old hose film,
pulling up the new hose film with the old hose film connected to it until the end of the old hose film is released,
sealing the new hose film underneath the end of the old hose film at a sealing point (3.6),
cutting the new hose film underneath the sealing point (3.6), disposing of the old hose film packed in the new hose film,
further pulling up of the new hose film and tying the hose film at a tying point (3.1) located at a distance from the sealing point (3.6) remaining at the end,
widening the new hose film to form a funnel.

8. The method for emptying bulk goods, without contamination, from a transport container with a rigid outlet into an after-mounted device via a connection tube (1), wherein the method has the following method steps:
arranging the transport container in the sealed condition above the connection tube,
arranging a hose film (3) around the connection tube, so that it rests against the edge of the connection tube on the inlet side so that it seals,
tying the hose film above the connection tube so that one end of the hose film, which can be widened in the shape of a funnel, remains above the tying point (3.1),
clamping connection of the rigid outlet of the container and the beginning of the hose film,
detachment of the tying point (3.1) of the hose film and emptying of the bulk goods,
pulling hose film out of a hose film supply until clean hose film (3) is available above the connection tube (1),
sealing of the hose film at two adjacent sealing points (3.3, 3.4) in the clean region,
cutting of the hose film between the two sealing point (3.3, 3.4),
pulling of hose film out of the hose film supply and tying the same again at a tying point (3.1) at a distance from the cutting point,
removing the tying point (3.4) in the region of the cutting point and widening of the hose film between the cutting point and the tying point (3.1) located at a distance from the cutting point to form a funnel shape.

9. The method according to Claim 8, **characterised in that** an axial sealing ring (5) acting over the hose film against the edge of the connection tube on the inlet side is used for making the sealing contact of the hose film against the edge of the connection tube (1) on the inlet side.

10. The method according to any one of Claims 8 and 9, **characterised in that** a film carrier (2) surrounding the connection tube (1) is used to receive the hose film supply.

11. The method according to Claim 10, **characterised in that** the end of the hose film is revealed and is clamped with an elastic fixing ring (4) against a first bead (1.1) running round the periphery of the connection tube (1).

12. The method according to Claim 11, wherein, when the hose film supply is used up, the hose film is no longer pulled out of the hose film supply and the following method steps are carried out after the hose film has been cut between the two sealing points (3.3, 3.4):
removing the axial sealing ring (5),
pulling the elastic fixing ring (4), with the hose film , out of the first bead (1.1) into a second bead (1.2) located above the first bead (1.1),
fitting a new film carrier (2) with new hose film, and clamping the end of the new hose film with an elastic fixing ring (4) in the first bead (1.1) against the connection tube (1),
pulling the beginning of the new hose film out of the film carrier (2),
sealing the new hose film against the old hose film at a sealing point (3.5) located underneath the sealing point (3.4) of the old hose film,
pulling up the new hose film with the old hose film connected to it until the end of the old hose film is released from the second bead (1.2),
sealing the new hose film underneath the end of the old hose film at two adjacent sealing points (3.6, 3,7),
cutting the new hose film between the two sealing points (3.6, 3.7), disposing of the old hose film packed in the new hose film,
further pulling up of the new hose film and tying the new hose film at a tying point (3.1) located at a distance from the sealing point (3.7) remaining at the end,
removing the end sealing point (3.7) and widening of the new hose film to form a funnel shape.

13. The method according to any one of the preceding claims, **characterised in that** the sealing points (3.2-3.7) are designed as tying points.

14. The method according to any one of Claims 1-12, **characterised in that** the sealing points (3.2-3.7) are designed as welds.

15. A method for filling bulk goods, without contamination, into a container with a flexible inlet from a pre-mounted device via a connection tube (1), wherein the method has the following method steps:
arranging the container with open inlet above the connection tube,
arranging a hose film (3) around the connection tube so that it rests sealing against the edge of the connection tube on the inlet side,
tying the hose film underneath the connection tube so that one end of the hose film that can be widened to form a funnel shape remains underneath the tying point (8.1),
clamping connection of the inlet of the flexible container and the hose film so that a free end of the inlet remains above the clamped connection,
detachment of the tying point (8.1) of the hose film and filling the container with bulk goods,
pulling hose film out of a hose film supply until clean hose film (3) is available underneath the connection tube (1),
sealing the hose film at two adjacent sealing points (8.2, 8.3) in the clean region,
cutting the hose film between the two sealing points (8.2, 8.3),
tying (8.5) the free end of the inlet remaining above the clamping point against the hose film and securing it to it,
sealing of the inlet underneath the clamped connection at two adjacent points (8.6, 8.7), and cutting the inlet between them,
pulling hose film out of the hose film supply and retying the same at a tying point (8.1) at a distance from the cutting point of the hose film,
removing the sealing point (8.2) in the region of the cutting point of the hose film, and widening the hose film between the cutting point and the tying point (8.1) located at a distance from the cutting pint to form a funnel shape.

16. The method according to Claim 15, **characterised in that** a radial sealing ring (19) acting over the hose film against the end of the connection tube on the outlet side is used to make the sealing contact of the hose film against the end of the connection tube (1) on the outlet side.

17. The method according to Claim 15 or 16, **characterised in that** a film carrier (2) surrounding the connection tube (1) is used to receive the hose film supply.

18. The method according to Claim 17, **characterised in that** the end of the hose film is revealed and clamped with an elastic fixing ring (4) against a first bead (1.1) running round the periphery of the connection tube (1).

19. The method according to any one of Claims 15 - 18, **characterised in that** a radial expanding ring (9) surrounding the connecting point on the outside and a counter ring (10) supporting the connecting point on the inside are used for the clamping connection of the inlet of the flexible container and the hose film.

20. The method according to Claim 18, wherein, when the hose film supply is used up, the hose film is no longer pulled out of the hose film supply after the hose film is cut between the two sealing points (8.2, 8.3), and the following method steps are carried out:
removing the axial sealing ring (19),
pulling the elastic fixing ring (4), with the hose film, out of the first bead (1.1) into a second bead (1.2) located underneath the first bead (1.1),
fitting a new film carrier (2) with new hose film, and clamping the end of the new hose film with an elastic fixing ring (4) in the first bead (1.1) against the connection tube (1),
pulling the beginning of the new hose film out of the film carrier (2),
sealing the new hose film at a sealing point (8.8) located underneath the sealing point (8.1) of the old hose film,
pulling down the new hose film with the old hose film until the end of the old hose film is released from the second bead (1.2),
sealing the new hose film above the end of the old hose film at two adjacent sealing points (8.9, 8.10),
cutting the new hose film between the two sealing points (8.9, 8.10), disposing of the old hose film packed in the new hose film,
further pulling down of the new hose film and tying the new hose film at a tying point (8.1) located at a distance from the sealing point (8.10) remaining at the end,
removing the end sealing point (8.10) and widening of the new hose film to form a funnel shape.

## Revendications

1. Procédé pour vider, en évitant toute contamination, un produit en vrac d'un récipient à sortie flexible dans un dispositif monté en aval, via un tube de raccordement (1), lequel procédé présente les étapes suivantes :
disposer le récipient doté d'une sortie nouée en un point de nouage (11.1) au-dessus du tube de raccordement,
disposer un film tubulaire (3) autour du tube de raccordement de sorte qu'il s'applique de manière hermétique contre le bord côté d'entrée du tube de raccordement,
nouer le film tubulaire au-dessus du tube de raccordement de sorte qu'une extrémité du film tubulaire susceptible de s'élargir en forme de trémie reste au-dessus du point de nouage (3.1),
raccorder par serrage la sortie du récipient flexible et le film tubulaire de sorte qu'il reste du film tubulaire libre au-dessus du raccordement par serrage,
détacher les points de nouage (11.1, 3.1) de la sortie et du film tubulaire et vider le produit en vrac,
réunir (3.2) l'extrémité libre du film tubulaire restée au-dessus du point de serrage contre la sortie du récipient et la fixer à celle-ci,
tirer un film tubulaire d'une réserve de films tubulaires jusqu'à obtenir un film tubulaire propre (3) par-dessus le tube de raccordement (1),
fermer le film tubulaire en deux points de fermeture voisins (3.3, 3.4) dans la zone propre,
séparer le film tubulaire entre les deux points de fermeture (3.3, 3.4),
tirer un film tubulaire de la réserve de films tubulaires et nouer à nouveau celui-ci en un point de nouage (3.1) distant du point de séparation, et
éliminer le point de fermeture (3.4) dans la zone du point de séparation et élargir le film tubulaire entre le point de séparation et le point de nouage (3.1) se trouvant à distance du point de séparation pour obtenir une forme de trémie.

2. Procédé selon la revendication 1, **caractérisé en ce que**, pour assurer l'application hermétique du film tubulaire contre le bord côté d'entrée du tube de raccordement (1), on utilise un joint étanche axial (5) agissant, via le film tubulaire, contre le bord côté d'entrée du tube de raccordement.

3. Procédé selon l'une quelconque des revendications précédentes, **caractérisé en ce que** l'on utilise un support de film (2) entourant le tube de raccordement (1) pour recevoir la réserve de films tubulaires.

4. Procédé selon la revendication 3, **caractérisé en ce que** l'extrémité du film tubulaire est libérée et serrée par un anneau de fixation élastique (4) contre une première moulure (1.1) s'étendant sur la périphérie du tube de raccordement (1).

5. Procédé selon l'une quelconque des revendications précédentes, **caractérisé en ce que**, pour raccorder par serrage la sortie du récipient flexible et le film tubulaire, on utilise un anneau gonflable radial (9) entourant le point de raccordement de l'extérieur et un contre-anneau (10) soutenant le point de raccordement de l'intérieur.

6. Procédé selon la revendication 4, dans lequel, lorsque la réserve de films tubulaires commence à s'épuiser, après la séparation du film tubulaire entre les deux points de fermeture (3.3, 3.4), le film tubulaire n'est plus tiré de la réserve de films tubulaires et les étapes de procédé suivantes sont réalisées :
enlever le joint étanche axial (5),
tirer l'anneau de fixation élastique (4) avec le film tubulaire de la première moulure (1.1) dans une seconde moulure (1.2) située au-dessus de la première moulure (1.1),
installer un nouveau support de film (2) avec un nouveau film tubulaire et serrer l'extrémité du nouveau film tubulaire avec un anneau de fixation élastique (4) dans la première moulure (1.1) contre le tube de raccordement (1),
extraire le début du nouveau film tubulaire du support de film (2),
fermer le nouveau film tubulaire contre l'ancien film tubulaire en un point de fermeture (3.5) situé sous le point de fermeture (3.4) de l'ancien film tubulaire,
tirer vers le haut le nouveau film tubulaire avec l'ancien film tubulaire auquel il est relié jusqu'à ce que l'extrémité de l'ancien film tubulaire soit libérée de la seconde moulure (1.2),
fermer le nouveau film tubulaire en dessous de l'extrémité de l'ancien film tubulaire en deux points de fermeture (3.6, 3.7) voisins l'un de l'autre,
séparer le nouveau film tubulaire entre les deux points de fermeture (3.6, 3.7) et écarter l'ancien film tubulaire emballé dans le nouveau film tubulaire,
tirer encore vers le haut le nouveau film tubulaire et nouer le nouveau film tubulaire en un point de nouage (3.1) situé à distance du point de fermeture (3.7) restant à l'extrémité, et
éliminer le point de fermeture terminal (3.7) et élargir le nouveau film tubulaire en forme de trémie.

7. Procédé pour vider, en évitant toute contamination, un produit en vrac d'un récipient à sortie flexible dans un dispositif monté en aval, via un tube de raccordement (1), lequel procédé présente les étapes suivantes :
disposer le récipient avec une sortie nouée en un point de nouage (11.1) au-dessus du tube de raccordement,
disposer un film tubulaire (3) suffisant pour une opération de transvasement autour du tube de raccordement de sorte qu'il s'applique de manière étanche contre le bord côté d'entrée du tube de raccordement,
nouer le film tubulaire au-dessus du tube de raccordement de sorte qu'il reste une extrémité du film tubulaire susceptible de s'élargir en forme de trémie au-dessus du point de nouage (3.1),
raccorder par serrage la sortie du récipient flexible et le film tubulaire de sorte qu'il reste du film tubulaire libre au-dessus du raccordement par serrage,
détacher les points de nouage (11.1, 3.1) de la sortie et du film tubulaire et vider le produit en vrac,
réunir (3.2) l'extrémité libre du film tubulaire restée au-dessus du point de serrage contre la sortie du récipient et la fixer à celle-ci,
tirer le film tubulaire jusqu'à obtenir un film tubulaire propre (3) au-dessus du tube de raccordement (1),
fermer le film tubulaire en deux points de fermeture voisins (3.3, 3.4) dans la zone propre,
séparer le film tubulaire entre les deux points de fermeture (3.3, 3.4),
appliquer un nouveau film tubulaire et serrer l'extrémité du nouveau film tubulaire contre le tube de raccordement en dessous de l'ancien film tubulaire,
extraire le début du nouveau film tubulaire,
fermer le nouveau film tubulaire contre l'ancien film tubulaire en un point de fermeture (3.5) situé en dessous du point de fermeture (3.4) de l'ancien film tubulaire,
tirer vers le haut le nouveau film tubulaire et l'ancien film tubulaire auquel il est relié jusqu'à ce que l'extrémité de l'ancien film tubulaire soit libérée,
fermer le nouveau film tubulaire en dessous de l'extrémité de l'ancien film tubulaire en un point de fermeture (3.6),
séparer le nouveau film tubulaire en dessous du point de fermeture (3.6) et écarter l'ancien film tubulaire emballé dans le nouveau film tubulaire,
tirer encore vers le haut le nouveau film tubulaire et nouer le film tubulaire en un point de nouage (3.1) situé à distance du point de fermeture (3.6) restant à l'extrémité, et
élargir le nouveau film tubulaire en forme de trémie.

8. Procédé pour vider, en évitant toute contamination, un produit en vrac d'un récipient de transport à sortie rigide dans un dispositif monté en aval, via un tube de raccordement (1), lequel procédé présente les étapes suivantes :
disposer le récipient de transport à l'état fermé au-dessus du tube de raccordement,
disposer un film tubulaire (3) autour du tube de raccordement de sorte qu'il s'applique de manière étanche contre le bord côté d'entrée du tube de raccordement,
nouer le film tubulaire au-dessus du tube de raccordement de sorte qu'une extrémité du film tubulaire susceptible de s'élargir en forme d'entonnoir reste au-dessus du point de nouage (3.1),
raccorder par serrage la sortie rigide du récipient et le début du film tubulaire,
détacher le point de nouage (3.1) du film tubulaire et vider le produit en vrac,
tirer du film tubulaire d'une réserve de films tubulaires jusqu'à obtenir un film tubulaire propre (3) au-dessus du tube de raccordement (1),
fermer le film tubulaire en deux points de fermeture voisins (3.3, 3.4) dans la zone propre,
séparer le film tubulaire entre les deux points de fermeture (3.3, 3.4),
tirer du film tubulaire de la réserve et noue à nouveau celui-ci en un point de nouage (3.1) distant du point de séparation,
éliminer le point de nouage (3.4) dans la zone du point de séparation et élargir le film tubulaire entre le point de séparation et le point de nouage (3.1) se trouvant à distance du point de séparation pour obtenir une forme en trémie.

9. Procédé selon la revendication 8, **caractérisé en ce que**, pour obtenir l'application hermétique du film tubulaire contre le bord côté d'entrée du tube de raccordement (1), on utilise un joint hermétique axial (5) agissant, via le film tubulaire, contre le bord côté d'entrée du tube de raccordement.

10. Procédé selon l'une quelconque des revendications 8 et 9, **caractérisé en ce que** l'on utilise un support de film (2) entourant le tube de raccordement (1) pour recevoir la réserve de films tubulaires.

11. Procédé selon la revendication 10, **caractérisé en ce que** l'extrémité du film tubulaire est libérée et serrée par un anneau de fixation élastique (4) contre une première moulure (1.1) s'étendant sur la périphérie du tube de raccordement (1).

12. Procédé selon la revendication 11, dans lequel, lorsque la réserve de films tubulaires s'épuise, après la séparation du film tubulaire entre les deux points de fermeture (3.3, 3.4), le film tubulaire n'est plus tiré de la réserve et les étapes de procédé suivantes sont réalisées :
enlever le joint hermétique axial (5),
tirer l'anneau de fixation élastique (4) avec le film tubulaire de la première moulure (1.1) dans une seconde moulure (1.2) située au-dessus de la première moulure (1.1),
installer un nouveau support de film (2) avec un nouveau film tubulaire et serrer l'extrémité du nouveau film tubulaire avec un anneau de fixation élastique (4) dans la première moulure (1.1) contre le tube de raccordement (1),
extraire le début du nouveau film tubulaire du support de film (2),
fermer le nouveau film tubulaire contre l'ancien film tubulaire en un point de fermeture (3.5) situé sous le point de fermeture (3.4) de l'ancien film tubulaire,
tirer vers le haut le nouveau film tubulaire avec l'ancien film tubulaire auquel il est relié jusqu'à ce que l'extrémité de l'ancien film tubulaire soit libérée de la seconde moulure (1.2),
fermer le nouveau film tubulaire en dessous de l'extrémité de l'ancien film tubulaire en deux points de fermeture (3.6, 3.7) voisins l'un de l'autre,
séparer le nouveau film tubulaire entre les deux points de fermeture (3.6, 3.7) et écarter l'ancien film tubulaire emballé dans le nouveau film tubulaire,
tirer encore vers le haut le nouveau film tubulaire et nouer le nouveau film tubulaire en un point de nouage (3.1) situé à distance du point de fermeture (3.7) restant sur l'extrémité,
éliminer le point de fermeture terminal (3.7) et élargir le nouveau film tubulaire en forme de trémie.

13. Procédé selon l'une quelconque des revendications précédentes, **caractérisé en ce que** les points de fermeture (3.2-3.7) se présentent sous la forme de points de nouage.

14. Procédé selon l'une quelconque des revendications 1 à 12, **caractérisé en ce que** les points de fermeture (3.2-3.7) se présentent sous la forme de soudures.

15. Procédé pour remplir, en évitant toute contamination, un produit en vrac dans un récipient avec une entrée flexible depuis un dispositif monté en amont, via un tube de raccordement (1), lequel procédé comprend les étapes suivantes :
disposer le récipient avec l'entrée ouverte en dessous du tube de raccordement,
disposer un film tubulaire (3) autour du tube de raccordement de sorte qu'il s'applique de manière hermétique contre le bord côté d'entrée du tube de raccordement,
nouer le film tubulaire en dessous du tube de raccordement de sorte qu'il reste une extrémité du film tubulaire susceptible de s'élargir en forme de trémie en dessous du point de nouage (8.1),
raccorder par serrage l'entrée du récipient flexible et le film tubulaire de sorte qu'une extrémité libre de l'entrée reste au-dessus du raccordement par serrage,
détacher le point de nouage (8.1) du film tubulaire et remplir le récipient avec un produit en vrac,
tirer du film tubulaire d'une réserve de films tubulaires jusqu'à obtenir un film tubulaire propre (3) en dessous du tube de raccordement (1),
fermer le film tubulaire en deux points de fermeture voisins (8.2, 8.3) dans la zone propre,
séparer le film tubulaire entre les deux points de fermeture (8.2, 8.3),
réunir (8.5) l'extrémité de l'entrée restée libre au-dessus du point de serrage contre le film tubulaire et la fixer à celui-ci,
fermer l'entrée en dessous du raccordement par serrage en deux points (8.6, 8.7) voisins l'un de l'autre et séparer l'entrée entre ces derniers,
tirer du film tubulaire de la réserve de films tubulaires et nouer à nouveau celui-ci en un point de nouage (3.1) distant du point de séparation du film tubulaire,
éliminer le point de fermeture (8.2) dans la zone du point de séparation du film tubulaire et élargir le film tubulaire entre le point de séparation et le point de nouage (8.1) se trouvant à distance du point de séparation pour obtenir une forme de trémie.

16. Procédé selon la revendication 15, **caractérisé en ce que**, pour obtenir l'application hermétique du film tubulaire contre le bord côté de sortie du tube de raccordement (1), on utilise un joint hermétique radial (19) agissant, via le film tubulaire, contre le bord côté de sortie du tube de raccordement.

17. Procédé selon la revendication 15 ou 16, **caractérisé en ce que** l'on utilise un support de film (2) entourant le tube de raccordement (1) pour recevoir la réserve de films tubulaires.

18. Procédé selon la revendication 17, **caractérisé en ce que** l'extrémité du film tubulaire est libérée et serrée par un anneau de fixation élastique (4) contre une première moulure (1.1) s'étendant sur la périphérie du tube de raccordement (1).

19. Procédé selon l'une quelconque des revendications 15 à 18, **caractérisé en ce que**, pour le raccordement par serrage de l'entrée du récipient flexible et du film tubulaire, on utilise un anneau gonflable radial (9) entourant le point de raccordement de l'extérieur et un contre-anneau (10) soutenant le point de raccordement de l'intérieur.

20. Procédé selon la revendication 18, dans lequel, lorsque la réserve de films tubulaires s'épuise, après la séparation du film tubulaire entre les deux points de fermeture (8.2, 8.3), le film tubulaire n'est plus tiré de la réserve et les étapes de procédé suivantes sont réalisées :
enlever le joint hermétique radial (19),
tirer l'anneau de fixation élastique (4) avec le film tubulaire de la première moulure (1.1) dans une seconde moulure (1.2) située sous la première moulure (1.1),
installer un nouveau support de film (2) avec un nouveau film tubulaire et serrer l'extrémité du nouveau film tubulaire avec un anneau de fixation élastique (4) dans la première moulure (1.1) contre le tube de raccordement (1),
extraire le début du nouveau film tubulaire du support de film (2),
fermer le nouveau film tubulaire en un point de fermeture (8.8) situé sous le point de fermeture (8.1) de l'ancien film tubulaire,
tirer vers le bas le nouveau film tubulaire avec l'ancien film tubulaire jusqu'à ce que l'extrémité de l'ancien film tubulaire soit libérée de la seconde moulure (1.2),
fermer le nouveau film tubulaire au-dessus de l'extrémité de l'ancien film tubulaire en deux point de fermeture (8.9, 8.10) voisins l'un de l'autre,
séparer le nouveau film tubulaire entre les deux points de fermeture (8.9, 8.10) et écarter l'ancien film tubulaire emballé dans le nouveau film tubulaire,
tirer encore vers le bas le nouveau film tubulaire et nouer le nouveau film tubulaire en un point de nouage (8.1) situé à distance du point de fermeture (8.10) restant à l'extrémité, et
éliminer le point de fermeture terminal (8.10) et élargir le nouveau film tubulaire pour obtenir une forme de trémie.
